(19) Europäisches Patentamt
European Patent Office
Office européen des brevets

(11) **EP 2 316 731 B1**

(12) **FASCICULE DE BREVET EUROPEEN**

(45) Date de publication et mention
de la délivrance du brevet:
**16.11.2011 Bulletin 2011/46**

(51) Int Cl.:
***B64C 27/00*** *(2006.01)*

(21) Numéro de dépôt: **10010762.2**

(22) Date de dépôt: **27.09.2010**

(54) **Dispositif pour réduire les vibrations engendrées par un rotor d'un giravion, et giravion muni d'un tel disposirif**

Vorrichtung zur Vibrationsverringerung eines Drehflüglerrotors sowie Drehflügler mit einer solchen Vorrichtung

Device for vibration reduction induced by a rotor of a rotorcraft as well as a rotorcraft with such a device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **27.10.2009 FR 0905167**

(43) Date de publication de la demande:
**04.05.2011 Bulletin 2011/18**

(73) Titulaire: **EUROCOPTER**
**13725 Marignane Cédex (FR)**

(72) Inventeur: **Manfredotti, Thomas**
**06480 La Colle Sur Loup (FR)**

(74) Mandataire: **GPI & Associés**
**Europarc de Pichaury**
**Bât B2.9 - 1er Et.**
**1330, rue Guillibert de la Lauzière**
**13856 Aix en Provence Cedex 3 (FR)**

(56) Documents cités:
**FR-A1- 2 018 491     FR-A1- 2 768 995**
**US-A- 2 348 941**

**Description**

La présente invention concerne un dispositif pour réduire les vibrations engendrées par un rotor d'un giravion, et un giravion muni d'un tel dispositif.

En effet, le fonctionnement d'un rotor de sustentation d'un giravion, un rotor principal de sustentation et de propulsion d'un hélicoptère par exemple, engendre des efforts parasites au niveau de la tête de ce rotor de sustentation. Ces efforts parasites induisent alors des vibrations qui se propagent à la cellule du giravion, ces vibrations étant notamment sensibles au niveau de la cabine de pilotage de ce giravion.

Pour palier cet inconvénient, on a réalisé des dispositifs pour atténuer les vibrations générées, dénommés parfois résonateurs de tête de rotor.

Selon un premier type de dispositif décrit notamment par le document FR 2749901, on utilise une masse battante déplaçable selon une direction et un moyen de rappel apte à repositionner la masse battante dans une position prédéterminée.

Les dispositifs du premier type sont efficaces. Néanmoins, ces dispositifs du premier type sont parfois lourds.

De plus, la vitesse de rotation du rotor pouvant varier, la fréquence des vibrations à atténuer varie en conséquence. Or, les dispositifs du premier type étant conçus pour atténuer des vibrations ayant des fréquences données, ces dispositifs du premier type ne sont pas à même de s'adapter si les fréquences varient.

On note que le document EP1007406 décrit un dispositif de type masse-ressort.

Selon un deuxième type de dispositif, on utilise des pendules qui oscillent sous l'effet de la force centrifuge. Chaque pendule comporte un élément pesant relié à une articulation d'un support, ce support effectuant un mouvement rotatif autour de l'axe de rotation du rotor principal. Par exemple, le support est muni d'une pluralité de bras radiaux formant une étoile, chaque bras radial ayant une articulation reliée à un élément pesant.

Dès lors, contrairement aux dispositifs du premier type, il n'est pas nécessaire d'implémenter un moyen de rappel dédié, la force centrifuge fournissant l'effort de rappel requis.

Cette particularité confère aux dispositifs du deuxième type une capacité d'auto-adaptation aux variations de la fréquence des vibrations à atténuer.

En effet, une variation de la vitesse de rotation du rotor induit non seulement une variation de la fréquence des vibrations à atténuer mais de fait une variation de la force centrifuge exercée sur le pendule. Ainsi, ces dispositifs du deuxième type sont dits « auto-adaptables » ou encore « auto-réglables ».

Les pendules peuvent osciller dans un premier plan perpendiculaire à l'axe de rotation du rotor principal, ou encore dans un deuxième plan dans lequel est inscrit ledit axe de rotation du rotor principal en fonction de la nature des vibrations à amortir.

Le document FR 2733483 présente un dispositif du deuxième type tel que décrit précédemment.

Selon une première variante d'un dispositif du deuxième type, dénommé « résonateur pendulaire simple » par commodité, l'élément pesant est une masselotte reliée par un bras de liaison à une branche du support, le support étant solidarisé au moyeu du rotor.

La fréquence propre ω du résonateur est donnée à l'aide de la première relation suivant :

$$\omega = \Omega \sqrt{\frac{L \times r}{r^2 + \dfrac{I_0}{m}}}$$

où :

- $\Omega$ représente la vitesse de rotation du support du dispositif en nombre de tours par seconde,
- L représente une première distance reliant l'axe de rotation du rotor principal à l'articulation du pendule,
- r représente une deuxième distance du centre de gravité de l'élément pesant du pendule à son articulation au support,
- $I_0$ désigne l'inertie de l'élément pesant autour de l'axe de mouvement pendulaire de l'élément pesant,
- m représente la masse de l'élément pesant.

Bien qu'efficace, on note qu'un résonateur pendulaire simple se règle en ajustant la première distance et/ ou la deuxième distance.

Par suite, pour atténuer des vibrations ayant des fréquences importantes par exemple sur un hélicoptère ayant plus de quatre pales, deux solutions sont envisageables.

Selon la première solution, la première distance doit être importante ce qui parait irréalisable du fait de l'augmentation de masse et de traînée en résultant.

Selon la seconde solution, la deuxième distance doit être minimisée. Néanmoins, cette seconde solution est difficilement applicable car il conviendrait d'utiliser des articulations surdimensionnées pour supporter l'élément pesant.

Le document FR 2018491 présente une deuxième variante dénommé « résonateur pendulaire bifilaire » par l'homme du métier, pour réduire notamment des vibrations ayant des hautes fréquences.

Chaque élément pesant bifilaire comporte un cavalier de jonction dans lequel est engagée une branche d'un support en étoile. Le cavalier de jonction est alors pourvu de deux premières ouvertures de section circulaire qui coopèrent avec deux secondes ouvertures de section circulaire de la branche correspondante via deux rouleaux.

Lorsqu'il est mis en mouvement par la force centrifuge, l'élément pesant effectue une translation circulaire. On rappelle qu'une translation circulaire d'un corps est un mouvement de ce corps dans un plan, deux points distincts dudit corps décrivant deux trajectoires circulaires de même rayon mais de centres différents.

On note que le document US 4212588 prévoit d'agencer le dispositif dans un carter muni de séparations.

Cette deuxième variante d'un dispositif du deuxième type est intéressante en permettant de réduire la première distance, par rapport à un dispositif réalisé selon la première variante.

Néanmoins, sur un hélicoptère muni d'un grand nombre de pales, cette première distance demeure importante.

De plus, on note que le frottement entre un élément pesant et les rouleaux associés, ainsi qu'entre une branche du support et les rouleaux associés à cette branche tendent à endommager l'ensemble du dispositif, ce qui induit une dégradation de ces performances.

Pour y remédier, un opérateur doit lubrifier le dispositif à chaque vol ce qui engendrent des difficultés évidentes.

Le document FR 2768995 présente une troisième variante d'un dispositif du deuxième type dénommé « résonateur pendulaire accéléré » par commodité. Selon ce document, l'élément pesant est une masselotte reliée par un bras de liaison à une branche du support, le support étant non pas solidarisé au moyeu du rotor mais à un organe menant tournant à une vitesse de rotation supérieure à la vitesse de rotation du rotor. La fréquence propre ω du résonateur est donnée à l'aide de la première relation suivant :

$$\omega = \Omega \sqrt{\dfrac{L \times r}{r^2 + \dfrac{I_0}{m}}}$$

où :

- Ω représente la vitesse de rotation de l'organe menant supérieure à la vitesse de rotation du rotor principal en nombre de tours par seconde,
- L représente une première distance reliant l'axe de rotation du rotor principal à l'articulation du pendule,
- r représente une deuxième distance du centre de gravité de l'élément pesant du pendule à son articulation au support,
- $I_0$ désigne l'inertie de l'élément pesant autour de l'axe de mouvement pendulaire de l'élément pesant,
- m représente la masse de l'élément pesant.

Par rapport à la première variante, la première distance est par suite considérablement réduite.

Par contre, le dispositif engendre une traînée aérodynamique non négligeable.

La présente invention a alors pour objet de proposer un dispositif pour réduire les vibrations engendrées par un rotor d'un giravion s'affranchissant des limitations mentionnées ci-dessus, ce dispositif permettant de réduire des vibrations ayant une fréquence importante sans engendrer une traînée importante et éventuellement ne nécessitant pas des actions de maintenance lourdes.

Selon l'invention, un dispositif pour réduire les vibrations d'un rotor principal de giravion, pourvu d'un moyeu et d'une pluralité de pales, possède un support ainsi qu'une pluralité d'éléments pesants et de rouleaux, chaque élément pesant comportant deux premières ouvertures respectivement au moins partiellement en regard de deux secondes ouvertures dudit support, chaque rouleau traversant une première ouverture et une seconde ouverture au moins partiellement en regard l'une de l'autre pour attacher un élément pesant au support, le dispositif étant pourvu d'un moyen de liaison apte à relier le support au moyeu, à savoir apte à transmettre les vibrations du support au moyeu.

En outre, le dispositif comporte un carter de protection fixé hermétiquement au moyen de liaison, le carter englobant le support et les éléments pesants fixés à ce support via les rouleaux.

Le carter de protection est donc dissocié du moyen du support et des éléments pesants associés, le carter ainsi que le moyen de support étant désolidarisés en rotation autour dudit axe de rotation. En effet, le carter est solidaire en rotation du moyen de liaison alors que le support est solidaire en rotation de l'arbre d'entraînement.

Le carter de protection est fixé hermétiquement au moyen de liaison, le carter englobant le support et les éléments pesants fixés à ce support via les rouleaux.

Ainsi, le carter est partiellement rempli par un lubrifiant, tel que de l'huile. Ce lubrifiant permet de lubrifier le dispositif, et notamment les rouleaux pour éviter une usure prématurée, sans nécessiter l'intervention récurrente d'un opérateur.

L'invention est ainsi un dispositif du type résonateur pendulaire bifilaire, chaque élément pesant étant apte à effectuer une translation circulaire.

Ce dispositif est notamment remarquable en ce qu'il comporte un arbre d'entraînement et un moyen d'entraînement tournant à une première vitesse supérieure à une deuxième vitesse de rotation du moyeu, l'arbre d'entraînement étant solidaire en rotation autour d'un axe de rotation du support et du moyen d'entraînement, le moyen de liaison étant relié au support par un organe de liaison permettant au support d'effectuer une rotation autour de l'axe de rotation relativement au moyen de liaison.

Dès lors, les éléments pesants du dispositif générant des vibrations aptes à atténuer les vibrations créés par le rotor principal d'un giravion effectuent une rotation autour de l'axe de rotation du support à une première vitesse supérieure à la vitesse de rotation du moyeu du rotor principal contrairement à ce que propose le document US4212588 par exemple.

Il en résulte que les éléments pesants peuvent générer des vibrations à des fréquences importantes tout en étant contenus dans un espace restreint en étant à proximité immédiate de l'axe de rotation du rotor, à l'inverse de la solution du document FR 2768995 relativement encombrante du fait des mouvements pendulaires des corps oscillants utilisés.

Par ailleurs, l'invention peut comporter une ou plusieurs des caractéristiques additionnelles qui suivent.

Ainsi, pour permettre une rotation relative entre le support tournant à une première vitesse et le moyen de liaison tournant à une deuxième vitesse, l'organe de liaison comprend un roulement à billes.

Par exemple, le roulement à billes est agencé entre un épaulement de fixation d'un pied du support solidaire en rotation de l'arbre d'entraînement et un épaulement interne du moyen de liaison. Dès lors, les vibrations générées par la translation circulaire des éléments pesants sont transmises au moyeu successivement par le support, ensuite par le roulement à billes dont la cage interne est fixée au support, puis par le moyen de liaison fixé à la cage externe dudit roulement à billes.

Par ailleurs, selon une première variante le moyen d'entraînement est un moteur dédié à l'entraînement du support, à savoir un moteur électrique dédié à l'entraînement du support et logé dans une boîte de transmission éventuellement.

Selon une deuxième variante, le moyen d'entraînement est un organe tournant d'une boîte de transmission de puissance.

Le dispositif présente alors à minima selon cette réalisation la combinaison des moyens suivants :

- un moyen d'entraînement tournant à une première vitesse supérieure à une deuxième vitesse de rotation du moyeu, l'arbre d'entraînement étant solidaire en rotation autour d'un axe de rotation du moyen d'entraînement et du support,

- un moyen de liaison apte à relier le support au moyeu et comportant un arbre d'entraînement, le moyen de liaison

étant relié au support par un organe de liaison permettant à ce support d'effectuer une rotation autour de l'axe de rotation relativement au moyen de liaison.

Cette combinaison, et non pas cette juxtaposition, permet de réduire des vibrations ayant une fréquence importante en engendrant une traînée minimisée par la présence du carter.

De plus, cette combinaison peut aussi minimiser les actions de maintenance à prévoir.

En effet, il devient possible de prévoir un barbotage du lubrifiant à l'intérieur du carter.

Par conséquent, selon une réalisation, le carter est pourvu d'un carénage inférieur solidarisé hermétiquement à un épaulement externe du moyen de liaison, le carter ayant un carénage supérieur fixé au carénage inférieur pour former un récipient fermé. Le carter de protection étant fixé hermétiquement au moyen de liaison, ce carter est donc étanche.

De plus, le carénage supérieur comporte éventuellement au moins un plan incliné dirigé vers un rouleau. Ainsi, en vol le lubrifiant du dispositif est mis en mouvement dans le carter, et vient notamment se déposer sur le carénage supérieur.

Lorsque le giravion est posé, ce lubrifiant glisse alors le long des plans inclinés du carénage supérieur et vient se déposer sur les rouleaux sans intervention humaine.

Selon un autre aspect, le support comporte au moins une tige d'approvisionnement apte à diriger un lubrifiant vers une seconde ouverture.

Chaque tige d'approvisionnement représente une écope allant du lubrifiant vers une seconde ouverture du support. Lors du mouvement rotatif du support, le lubrifiant parcourt de fait les tiges d'approvisionnement et atteint les secondes ouvertures.

Par ailleurs, chaque élément pesant ayant une face supérieure et une face inférieure aptes à être en regard d'un moyeu, au moins une desdites faces est solidarisée à une masse additionnelle servant de masse de réglage.

Par exemple, une masse additionnelle supérieure est fixée à la face supérieure, ou une masse additionnelle inférieure est fixée à la face inférieure, ou encore une masse additionnelle supérieure et une masse additionnelle inférieure sont respectivement fixées aux faces supérieure et inférieure.

Si une masse additionnelle recouvre intégralement une face de l'élément pesant, cette masse additionnelle comporte favorablement une lumière en vis à vis de chaque première ouverture de l'élément pesant associé afin qu'un lubrifiant puisse atteindre les premières ouvertures.

Outre un dispositif pour réduire les vibrations d'un rotor principal, l'invention a pour objet un giravion pourvu d'un rotor principal comportant un moyeu, ledit moyeu étant mis en rotation par un mât rotor entraîné par un premier étage d'une boîte de transmission de puissance, ce giravion comportant un dispositif pour réduire les vibrations dudit rotor principal tel que décrit précédemment ayant un support ainsi qu'une pluralité d'éléments pesants et de rouleaux, chaque élément pesant comportant deux premières ouvertures respectivement au moins partiellement en regard de deux secondes ouvertures dudit support pour attacher un élément pesant au support, chaque rouleau traversant une première ouverture et une seconde ouverture au moins partiellement en regard l'une de l'autre, le dispositif étant pourvu notamment :

- d'un moyen d'entraînement tournant à une première vitesse supérieure à une deuxième vitesse de rotation du moyeu, l'arbre d'entraînement étant solidaire en rotation autour d'un axe de rotation du support et du moyen d'entraînement,

- d'un moyen de liaison reliant le support audit moyeu et comportant un arbre d'entraînement, le moyen de liaison étant relié au support par un organe de liaison permettant au support d'effectuer une rotation autour de l'axe de rotation relativement au moyen de liaison.

De plus, ce giravion peut notamment posséder les caractéristiques qui suivent.

Ainsi, le moyen d'entraînement est éventuellement un organe tournant de ladite boîte de transmission de puissance, l'organe tournant effectuant un mouvement rotatif à ladite première vitesse.

Enfin, le moyen d'entraînement et le mât rotor sont coaxiaux. Par exemple, le mât rotor s'étend selon l'axe de rotation du rotor pour atteindre un premier étage terminal de la boîte de transmission le mettant en rotation à une deuxième vitesse, le moyen d'entraînement s'étendant selon l'axe de rotation à l'intérieur du mât rotor du rotor pour atteindre un étage intermédiaire de la boîte de transmission de puissance le mettant en rotation à une première vitesse.

L'invention et ses avantages apparaîtront avec plus de détails dans le cadre de la description qui suit avec des exemples de réalisation donnés à titre illustratif en référence aux figures annexées qui représentent :

- la figure 1, une coupe schématique d'un dispositif selon l'invention,

- la figure 2, une vue isométrique partielle montrant le support dudit dispositif sans les éléments pesants,

- la figure 3, une vue isométrique montrant ledit support équipé d'éléments pesants dépourvus de masses additionnelles,

- la figure 4, une vue isométrique montrant ledit support équipé d'éléments pesants pourvus de masses additionnelles, et

- la figure 5, une vue éclatée d'un élément pesant pourvu de masses additionnelles.

Les éléments présents dans plusieurs figures distinctes sont affectés d'une seule et même référence.

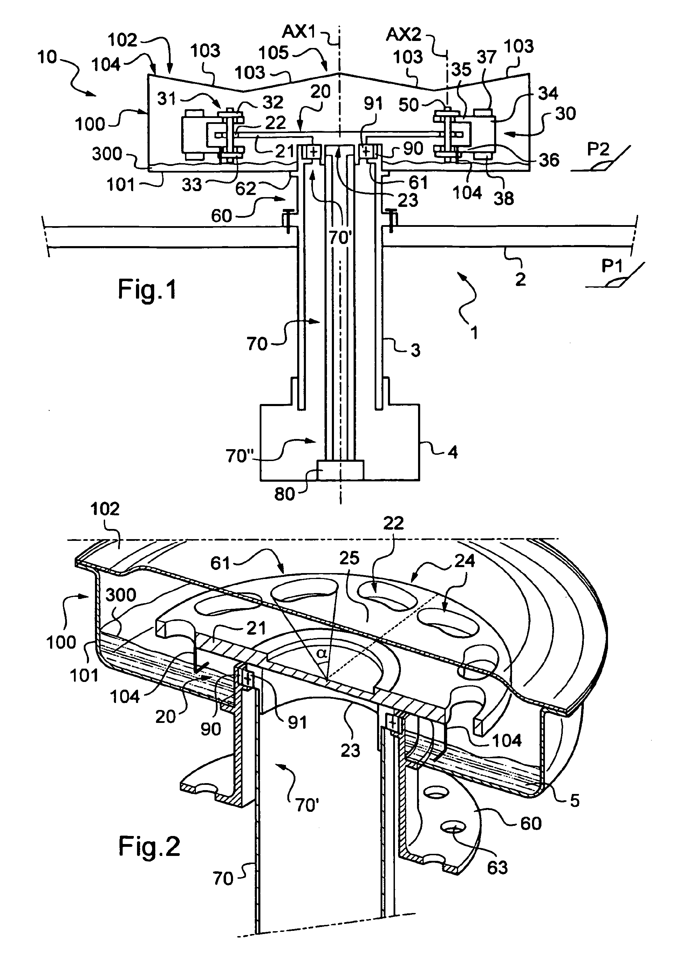

La figure 1 présente une coupe schématique d'un dispositif 10 pour réduire les vibrations d'un rotor principal 1 de giravion.
Ce rotor principal 1 comprend un moyeu 2 s'étendant dans un premier plan P1 pour porter des pales non représentées. Afin que les pales génèrent une portance, ce moyeu 2 est mis en rotation par un premier étage terminal d'une boîte de transmission de puissance 4 par l'intermédiaire d'un mât rotor 3, le mât rotor étant solidaire en rotation autour de l'axe de rotation AX1 du moyeu 2 et de l'étage terminal de la boîte de transmission de puissance 4.
Les mouvements de pales lors de leur rotation autour de l'axe de rotation AX1 sont à l'origine de la création de vibrations, susceptibles d'être perçues dans la cellule du giravion par des occupants de ce giravion.
Par conséquent, le giravion comporte un dispositif 10 apte à réduite lesdites vibrations, le dispositif 10 étant un résonateur pendulaire.
Le dispositif 10 comporte des éléments pesants 30 agencés sur un support 20, et plus précisément sur un disque 21 de ce support 20 s'étendant dans un deuxième plan P2 parallèle au premier plan P1.
Chaque élément pesant 30 est un cavalier de jonction muni d'une joue supérieure 35 et d'une joue inférieure 36 solidarisées à un socle commun 34. Les joues supérieure 35 et inférieure 36 sont de plus espacées afin de définir un espace dans lequel est engagé le support 20.
De plus, chaque élément pesant 30 présente deux premières ouvertures 31 en regard au moins partiellement de deux secondes ouvertures 22 du support 20, les secondes ouvertures 22 étant ménagées dans le disque 21 de ce support 20.
Dès lors, chaque première ouverture 31 d'un élément pesant 30 est réalisée par le biais d'une perforation supérieure 32 effectuée dans la joue supérieure 35 ainsi que par le biais d'une perforation inférieure 33 effectuée dans la joue inférieure 36. La perforation inférieure 33 d'une première ouverture 31 est alors en regard de la perforation supérieure 32, ces perforations inférieure 33 et supérieure 32 étant symétriques par rapport à un plan médian de l'élément pesant 30.
Afin de lier en rotation autour de l'axe de rotation AX1 du rotor principal chaque élément pesant 30 et le support 20, le dispositif 10 comprend deux rouleaux 50 par élément pesant.
Par suite, chaque rouleau 50 est agencé selon un axe d'agencement AX2 parallèle à l'axe de rotation AX1, un rouleau traversant la première ouverture 31 et la seconde ouverture 22 correspondantes. Plus précisément, un rouleau 50 traverse successivement une perforation supérieure 32 d'une première ouverture 31, la seconde ouverture 22 du support 20 puis la perforation inférieure 33 de ladite première ouverture 31.
Il est à noter que l'agencement d'un élément pesant 30 autour du disque 21 du support 20 à l'aide d'un rouleau peut être réalisé avec les moyens décrits dans le document FR2018491.
Ainsi, chaque élément pesant 30 est un élément pesant de type bifilaire apte à réaliser une translation circulaire sous l'effet des forces centrifuges par rapport au support 20.
On note de plus que chaque élément pesant peut être muni de masses additionnelles de réglage 37, 38.

Par ailleurs, le dispositif 10 comporte un moyen de liaison 60 au moyeu 2.

Ce moyen de liaison 60 est un tube s'étendant selon l'axe de rotation AX1 dont une première extrémité est apte à être fixée au moyeu 2 par des moyens usuels, par exemple par vissage ou encore par soudure.

Une deuxième extrémité du moyen de liaison 60 est alors reliée au support 20 par un organe de liaison 90 permettant au support d'effectuer une rotation autour de l'axe de rotation AX1 relativement au moyen de liaison 60.

En outre, le dispositif 10 possède un arbre d'entraînement 70 en rotation du support 20 autour de l'axe de rotation AX1, ainsi qu'un moyen d'entraînement en rotation 80 de cet arbre d'entraînement 70.

Le support 20 comportant un pied 23 cylindrique solidaire du disque 22 qui présente une symétrie de révolution par rapport à l'axe de rotation AX1, une première zone extrémale 70' de l'arbre d'entraînement 70 est alors fixée au support 20, plus particulièrement au pied 21. La fixation de l'arbre d'entraînement 70 au pied 21 du support 20 peut être réalisée par tout moyen usuel, par emmanchement en force du pied 21 dans l'arbre d'entraînement 70 et par soudure par exemple.

La deuxième zone extrémale 70" de l'arbre d'entraînement 70 est en outre fixée au moyen d'entraînement 80. Le moyen d'entraînement 80 étant disposé dans la boîte de transmission de puissance 4, l'arbre d'entraînement 70 est coaxial au mât rotor 3 et s'étend à l'intérieur de ce mât rotor 3.

Avantageusement, le moyen d'entraînement 80 entraîne en rotation autour de l'axe de rotation AX1 le support 20 à une première vitesse V1 supérieure à une deuxième vitesse V2 de rotation du moyeu 2. La fréquence propre du dispositif 10 étant proportionnelle à la vitesse de rotation du support des éléments pesants bifilaires, on comprend que l'invention permet de générer des vibrations ayant des fréquences importantes.

Par suite, selon une variante, le moyen d'entraînement 80 est un moteur électrique, agencé au fond de la boîte de transmission 4. Néanmoins, en fonction de l'encombrement disponible on peut envisager d'autres agencements du moteur électrique, par exemple au sein du mât rotor 3.

Selon une autre variante, le moyen d'entraînement 80 est un organe tournant de la boîte de transmission de puissance 4, à savoir un étage intermédiaire de la boîte de transmission de puissance 4.

En effet, on rappelle qu'une boîte de transmission de puissance 4 d'un giravion a notamment pour fonction de convertir un mouvement rotatif généré par un turbomoteur ayant une vitesse de r en un mouvement rotatif ayant une vitesse de rotation faible de l'ordre de quelques centaines de tours par minute. Par suite, la boîte de transmission de puissance 4 comporte une pluralité d'étages, le mât rotor étant entraîné par un étage terminal.

Dès lors, on comprend qu'un étage intermédiaire de la boîte de transmission de puissance 4, à savoir un étage amont par rapport à l'étage terminal, effectue une rotation à une première vitesse supérieure à la deuxième vitesse de rotation de l'étage terminal.

On note que l'organe de liaison autorise ce fonctionnement selon lequel le moyeu 2 et donc le moyen de liaison 60 effectue une rotation à une vitesse qui diffère de celle du support 20.

Ainsi, l'organe de liaison 90 possède éventuellement un roulement à billes 91 disposé entre un épaulement de fixation du pied 23 du support 20 et un épaulement interne 61 du moyen de liaison 60. On remarque que l'épaulement interne est ménagé sur une surface du moyen de liaison 60 en regard de l'arbre d'entraînement 70, ce qui explique son appellation.

En outre, la cage interne du roulement à billes peut être solidarisée au pied 21, alors que sa cage externe peut être solidarisée au moyen de liaison 60.

Par ailleurs, afin de présenter une traînée minimale et pour minimiser les opérations de maintenance, le dispositif 10 possède un carter 100 de protection définissant un récipient d'une part hermétiquement fermé autour du support 20 ainsi que des éléments pesants 30 attachés à ce support 20 et, d'autre part solidaire en rotation du moyen de liaison 60 autour de l'axe de rotation AX1.

Ce carter 100 comporte alors un carénage inférieur 101 emmanché autour du moyen de liaison 60, ce carénage inférieur 101 étant solidarisé à un épaulement externe 62 par soudure par exemple. On peut en outre mettre en oeuvre un joint pour garantir une bonne étanchéité entre le carénage inférieur et le moyen de liaison 60.

La carter 100 a alors un carénage supérieur 102 fixé au carénage inférieur 101 pour former ledit récipient.

Pour minimiser les opérations de maintenance, on remplit partiellement le carter 100 à l'aide d'un lubrifiant 300, tel que de l'huile.

Lorsque le support 20 est mis en rotation, le lubrifiant se déplace dans le carter et lubrifie notamment les premières et secondes ouvertures 31, 22 ainsi que les rouleaux 50.

Afin d'optimiser cette lubrification, le carénage supérieur 102 présente des plans inclinés 103 dirigés vers les rouleaux 50. Dès lors, en référence à la figure 1, le carénage supérieur 102 présente :

-    une couronne externe inclinée de l'extérieur du carénage supérieur 102 vers le centre de ce carénage supérieur 102 de manière à présenter une inclinaison vers les rouleaux 50, et

-    une couronne interne inclinée du centre du carénage supérieur 102 vers l'extérieur de ce carénage supérieur 102 de manière à présenter une inclinaison vers les rouleaux 50.

Par suite le lubrifiant déposé sur le carénage supérieur tend à glisser le long des plans inclinés 103 pour se répandre sur les rouleaux et de fait sur les premières et secondes ouvertures 31, 22 accueillant les rouleaux 50.

De plus, le dispositif 10 peut être muni de tiges d'approvisionnement 104, éventuellement en forme de L, apte à être en contact avec le lubrifiant de manière à l'acheminer vers les premières ouvertures 31.

La figure 2 présente une vue isométrique partielle montrant le support 20 dudit dispositif 10 sans les éléments pesants 30.

En référence à cette figure 2, le dispositif 10 comporte une tige d'approvisionnement 104 par seconde ouverture 22, chaque tige d'approvisionnement 104 étant disposée à proximité d'une seconde ouverture 22.

Par ailleurs, on remarque que les premières et secondes ouvertures 31, 22 ont selon une option une forme circulaire.

Selon une option alternative, chaque ouverture décrit une couronne C1 sur un arc de cercle $\alpha$ prédéterminé, cet arc de cercle décrivant un angle de 15 degrés par exemple.

De manière imagée, chaque ouverture a une section en forme de « haricot ».

De plus, le support 20 comporte des paires 24 de secondes ouvertures 22, deux secondes ouvertures 22 d'une même paire 24 présentent une symétrie orthogonale par rapport à une section radiale 25 du disque 21 du support 20

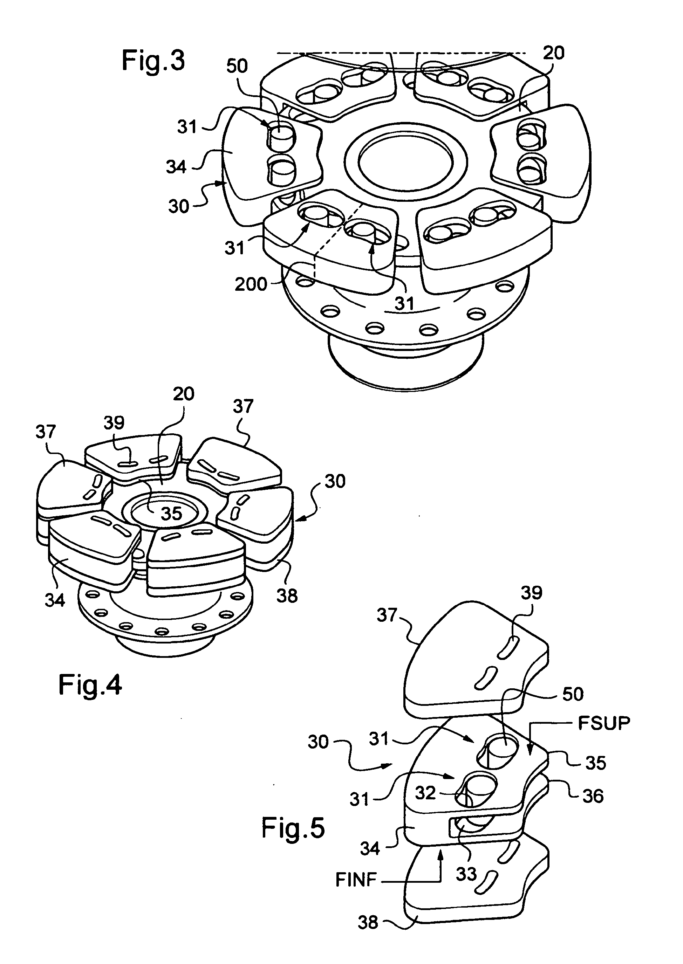

De même, en référence à la figure 3 chaque élément pesant possédant une paire de premières ouvertures qui coopèrent avec des paires de secondes ouvertures du support 20 via des rouleaux 50, les deux premières ouvertures 31 de chaque paire présentent une symétrie orthogonale par rapport à un plan vertical de symétrie 200 de l'élément pesant 30.

Par ailleurs, on constate que les éléments pesants du dispositif 10 représentés sont répartis de manière équidistante sur le pourtour du disque du support 20.

En référence aux figures 4 et 5, chaque élément pesant est pourvu d'au moins une masse additionnelle 37, 38 de réglage.

En effet, en référence à la figure 5, une masse additionnelle supérieure 37 est fixée, par exemple de manière réversible à l'aide de boulons, sur une face supérieure FSUP de l'élément pesant 30. De même, une masse additionnelle inférieure 38 est fixée, par exemple de manière réversible à l'aide de boulons, sur une face inférieure FINF de l'élément pesant 30.

On note qu'il est envisageable de pourvoir l'élément d'une unique masse additionnelle, sur sa face supérieure FSUP ou inférieure FINF. De plus, chaque masse additionnelle peut comporter un ou plusieurs organes distincts.

En outre, la figure 1 prévoit une version selon laquelle une masse additionnelle recouvre partiellement une face de l'élément pesant.

A l'inverse, selon la version de la figure 5, une masse additionnelle recouvre intégralement une face de cet élément pesant.

Dès lors, pour favoriser la lubrification des premières ouvertures et des rouleaux, chaque masse additionnelle peut comporter une lumière 39 en regard de chaque première ouverture 31.

De plus, la section d'une lumière a des premières dimensions inférieures aux deuxièmes dimensions de la première ouverture correspondante. Autrement dit, une section d'une lumière prise isolément peut être inscrite dans une section d'une première ouverture prise isolément.

Dès lors selon cette variante, les rouleaux sont éventuellement de simples cylindres. En effet, il n'est plus nécessaire de prévoir un moyen de fixation d'un rouleau par boulons par exemple, chaque rouleau étant verticalement bloqué par les masses additionnelles supérieure et inférieure.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif (10) pour réduire les vibrations d'un rotor principal (1) de giravion pourvu d'un moyeu (2) et d'une pluralité de pales, ledit dispositif (10) ayant un support (20) ainsi qu'une pluralité d'éléments pesants (30) et de rouleaux (50), chaque élément pesant (30) comportant deux premières ouvertures (31) respectivement au moins partiellement en regard de deux secondes ouvertures (22) dudit support (20), chaque rouleau (50) traversant une première ouverture (31) et une seconde ouverture (22) au moins partiellement en regard l'une de l'autre pour attacher un élément pesant (30) au support (20), ledit dispositif (10) étant pourvu d'un moyen de liaison (60) apte à relier le support (20) audit moyeu (2), **caractérisé en ce qu'**il comporte un arbre d'entraînement (70) et un moyen d'entraînement (80) tournant à une première vitesse (V1) supérieure à une deuxième vitesse (V2) de rotation dudit moyeu (2), ledit arbre d'entraînement (70) étant solidaire en rotation autour d'un axe de rotation (AX1) dudit support (20), ledit moyen de liaison (60) étant relié audit support (20) par un organe de liaison (90) permettant audit support (20) d'effectuer une rotation autour dudit axe de rotation (AX1) relativement au moyen de liaison (60), un carter (100) de protection étant fixé hermétiquement audit moyen de liaison (60) de manière à être solidaire de ce moyen de liaison (60) en rotation autour dudit axe de rotation (AX1), ledit carter (100) englobant ledit support (20) et lesdits éléments pesants (30) fixés à ce support (20) via lesdits rouleaux (50), ledit carter (100) étant partiellement rempli par un lubrifiant (300).

2. Dispositif selon la revendication 1,
   **caractérisé en ce que** ledit organe de liaison (90) comprend un roulement à billes (91).

3. Dispositif selon l'une quelconque des revendications précédentes,
   **caractérisé en ce que** ledit moyen d'entraînement (80) est un moteur dédié à l'entraînement dudit support (20).

4. Dispositif selon l'une quelconque des revendications 1 à 3,
   **caractérisé en ce que** ledit moyen d'entraînement (80) est un organe tournant d'une boîte de transmission de puissance (4).

5. Dispositif selon l'une quelconque des revendications 1 à 4,
   **caractérisé en ce que** ledit carter (100) est pourvu d'un carénage inférieur (101) solidarisé hermétiquement à un épaulement externe (62) dudit moyen de liaison (60), ledit carter (100) ayant un carénage supérieur (102) fixé audit carénage inférieur (101) pour former un récipient fermé.

6. Dispositif selon la revendication 5,
   **caractérisé en ce que** ledit carénage supérieur (102) comporte au moins un plan incliné (103) dirigé vers un rouleau (50).

7. Dispositif selon l'une quelconque des revendications précédentes,
   **caractérisé en ce que** ledit support (20) comporte au moins une tige d'approvisionnement (104) apte à diriger ledit lubrifiant vers une seconde ouverture (22).

8. Dispositif selon l'une quelconque des revendications précédentes,
   **caractérisé en ce que**, chaque élément pesant (30) ayant une face supérieure (FSUP) et une face inférieure (FINF) apte à être en regard d'un moyeu (2), au moins une desdites faces (FINF, FSUP) est solidarisée à une masse additionnelle (37, 38).

9. Dispositif selon la revendication 8,
   **caractérisé en ce que** ladite masse additionnelle (37, 38) comporte une lumière (39) en vis à vis de chaque première ouverture (31) de l'élément pesant (30) associé.

10. Dispositif selon l'une quelconque des revendications précédentes,
    **caractérisé en ce que** lesdites première et secondes ouvertures (31, 22) ont chacune une section décrivant une couronne (C1) sur un arc de cercle (a) prédéterminé.

11. Giravion pourvu d'un rotor principal (1) comportant un moyeu (2), ledit moyeu (2) étant mis en rotation par un mât rotor (3) entraîné par un premier étage d'une boîte de transmission de puissance (4), ledit giravion comportant un dispositif (10) pour réduire les vibrations dudit rotor principal (1) selon l'une quelconque des revendications précédentes ayant un support (20) ainsi qu'une pluralité d'éléments pesants (30) et de rouleaux (50), chaque élément pesant (30) comportant deux premières ouvertures (31) respectivement au moins partiellement en regard de deux secondes ouvertures (22) dudit support (20), chaque rouleau (50) traversant une première ouverture (31) et une seconde ouverture (22) au moins partiellement en regard l'une de l'autre pour attacher un élément pesant (30) au support (20) **caractérisé en ce que** ledit dispositif (10) étant pourvu :

    - d'un moyen d'entraînement (80) tournant à une première vitesse (V1) supérieure à une deuxième vitesse (V2) de rotation dudit moyeu (2), ledit arbre d'entraînement (70) étant solidaire en rotation autour d'un axe de rotation (AX1) dudit support (20),
    - d'un moyen de liaison (60) reliant le support (20) audit moyeu (2) et comportant un arbre d'entraînement (70), ledit moyen de liaison (60) étant relié audit support (20) par un organe de liaison (90) permettant audit support (20) d'effectuer une rotation autour dudit axe de rotation (AX1) relativement au moyen de liaison (60),
    - d'un carter (100) de protection fixé hermétiquement audit moyen de liaison (60) de manière à être solidaire de ce moyen de liaison (60) en rotation autour dudit axe de rotation (AX1), ledit carter (100) englobant ledit support (20) et lesdits éléments pesants (30) fixés à ce support (20) via lesdits rouleaux (50), ledit carter (100) étant partiellement rempli par un lubrifiant (300).

12. Giravion selon la revendication 11,
    **caractérisé en ce que** ledit moyen d'entraînement (80) est un organe tournant de ladite boîte de transmission de puissance (4), ledit organe tournant effectuant un mouvement rotatif à ladite première vitesse (V1).

13. Giravion selon l'une quelconque des revendications 11 à 12,
    **caractérisé en ce que** ledit moyen d'entraînement (80) et ledit mât rotor (3) sont coaxiaux.

**Claims**

1. A device (10) for reducing vibrations in a main rotor (1) of a rotorcraft, provided with a hub (2) and a plurality of blades, the said device (10) having a support (20) and a plurality of weight elements (30) and rollers (50), each weight element (30) including two first openings (31) respectively at least partly opposite two second openings (22) in the said support (20), each roller (50) passing through a first opening (31) and a second opening (22) at least partly opposite each other, for connecting a weight element (30) to the support (20), the said device (10) being provided with a means (60) of connection suitable for connecting the support (20) to the said hub (2), **characterised in the** said device includes a drive shaft (70) and a drive means (80) rotating at a first speed (V1) which is greater than a second speed (V2) of rotation of the said hub (2), the said drive shaft (70) being fixed in rotation about an axis of rotation (AX1) of the said support (20), the said means (60) of connection being connected to the said support (20) by a connection member (90) enabling the said support (20) to rotate about the said axis of rotation (AX1) relative to the means (60) of connection, a protective casing (100) being fixed in a sealed manner to the said means (60) of connection such that the said casing is fixed in rotation with this means (60) of connection about the said axis of rotation (AX1), the said casing (100) surrounding the said support (20) and the said weight elements (30) fixed to this support (20) by way of the said rollers (50), and the said casing (100) being partly filled with a lubricant (300).

2. A device according to Claim 1, **characterised in that** the said connection member (90) comprises a ball bearing (91).

3. A device according to either of the preceding claims, **characterised in that** the said drive means (80) is a motor dedicated to driving the said support (20).

4. A device according to any one of Claims 1 to 3, **characterised in that** the said drive means (80) is a rotary member of a power transmission box (4).

5. A device according to any one of Claims 1 to 4, **characterised in that** the said casing (100) is provided with a lower plate part (101) which is fixed in a sealed manner to an outer shoulder (62) of the said means (60) of connection, the said casing (100) having an upper plate part (102) fixed to the said lower plate part (101) to form a closed receptacle.

6. A device according to Claim 5, **characterised in that** the said upper plate part (102) includes at least one inclined plane (103) which is directed towards a roller (50).

7. A device according to any one of the preceding claims, **characterised in that** the said support (20) includes at least one supply rod (104) suitable for directing the said lubricant towards a second opening (22).

8. A device according to any one of the preceding claims, **characterised in that** each weight element (30) has an upper face (FSUP) and a lower face (FINF) suitable for being opposite a hub (2), and at least one of the said faces (FINF, FSUP) is integrally formed with an additional weight (37, 38).

9. A device according to Claim 8, **characterised in that** the said additional weight (37, 38) includes an aperture (39) aligned with each first opening (31) of the associated weight element (30).

10. A device according to any one of the preceding claims, **characterised in that** the said first and second openings (31, 32) each have a section in the shape of a ring (C1) over a predetermined arc ($\alpha$) of a circle.

11. A rotorcraft provided with a main rotor (1) including a hub (2), the said hub (2) being rotated by a rotor mast (3) driven by a first stage of a power transmission box (4),
the said rotorcraft including a device (10) for reducing vibrations in the main rotor (1) according to any one of the preceding claims, having a support (20) and a plurality of weight elements (30) and rollers (50), each weight element (30) including two first openings (31) respectively at least partly opposite two second openings (22) in the said support (20), each roller (50) passing through a first opening (31) and a second opening (22) at least partly opposite each other, for connecting a weight element (30) to the support (20), **characterised in that** the said device (10) is provided with:

 - a drive means (80) rotating at a first speed (V1) which is greater than a second speed (V2) of rotation of the said hub (2), the said drive shaft (70) being fixed in rotation about an axis of rotation (AX1) of the said support (20),
 - a means (60) of connection connecting the support (20) to the said hub (2) and including a drive shaft (70), the said means (60) of connection being connected to the said support (20) by a connection member (90) enabling the said support (20) to rotate about the said axis of rotation (AX1) relative to the means (60) of connection,
 - a protective casing (100) fixed in a sealed manner to the said means (60) of connection such that the said casing is fixed in rotation with this means (60) of connection about the said axis of rotation (AX1), the said casing (100) surrounding the said support (20) and the said weight elements (30) fixed to this support (20) by way of the said rollers (50), and the said casing (100) being partly filled with a lubricant (300).

**12.** A rotorcraft according to Claim 11, **characterised in that** the said drive means (80) is a rotary member of the said power transmission box (4), the said rotary member performing a rotary movement at the said first speed (V1).

**13.** A rotorcraft according to either of Claims 11 and 12, **characterised in that** the said drive means (80) and the said rotor mast (3) are coaxial.

**Patentansprüche**

**1.** Vorrichtung (10) zum Reduzieren der Vibrationen eines Hauptrotors (1) eines Drehflügelflugzeugs mit einer Nabe (2) und einer Mehrzahl von Rotorblättern, wobei die Vorrichtung (10) einen Träger (20) sowie eine Mehrzahl von Gewichtselementen (30) und Rollen (50) aufweist, wobei jedes Gewichtselement (30) zwei erste Öffnungen (31) aufweist, die jeweils zumindest teilweise gegenüber zwei zweiten Öffnungen (22) des Trägers (20) angeordnet sind, wobei jede Rolle (50) eine erste Öffnung (31) und eine zweite Öffnung (22) durchquert, die sich zumindest teilweise gegenüberliegen, um ein Gewichtselement (30) am Träger (20) zu befestigen, wobei die Vorrichtung (10) mit einem Verbindungsmittel (60) versehen ist, welches den Träger (20) mit der Nabe (2) verbinden kann, **gekennzeichnet durch** eine Antriebswelle (70) und ein Antriebsmittel (80), welches sich mit einer ersten Geschwindigkeit (V1) dreht, die größer ist als eine zweite Drehgeschwindigkeit (V2) der Nabe (2), wobei die Antriebswelle (70) drehfest um eine Drehachse (AX1) des Trägers (20) angeordnet ist, wobei das Verbindungsmittel (60) über ein Verbindungsorgan (90) mit dem Träger (20) verbunden ist, welches dem Träger (20) erlaubt, eine Drehbewegung um die Drehachse (AX1) relativ zu den Verbindungsmitteln (60) durchzuführen, wobei ein Schutzgehäuse (100) hermetisch an den Verbindungsmitteln (60) befestigt ist, derart, dass es drehfest mit den Verbindungsmitteln (60) bei einer Drehung um die Drehachse (AX1) befestigt ist, wobei das Gehäuse (100) den Träger (20) und die Gewichtselemente (30), die an dem Träger (20) über die Rollen (50) befestigt sind, umschließt, wobei das Gehäuse (100) teilweise mit einem Schmiermittel (300) gefüllt ist.

**2.** Vorrichtung nach Anspruch 1, **dadurch gekennzeichnet, dass** das Verbindungsorgan (90) ein Kugellager (91) aufweist.

**3.** Vorrichtung nach einem der vorstehenden Ansprüche, **dadurch gekennzeichnet, dass** die Antriebsmittel (80) aus einem Motor bestehen zum Antrieb des Trägers (20).

**4.** Vorrichtung nach einem der Ansprüche 1 bis 3, **dadurch gekennzeichnet, dass** die Antriebsmittel (80) ein sich drehendes Organ eines Leistungsgetriebes (4) aufweisen.

**5.** Vorrichtung nach einem der Ansprüche 1 bis 4, **dadurch gekennzeichnet, dass** das Gehäuse (100) eine untere Verkleidung (101) aufweist, die hermetisch an einer äußeren Schulter (62) des Verbindungsmittels (60) befestigt ist, wobei das Gehäuse (100) eine obere Verkleidung (102) aufweist, die an der unteren Verkleidung (101) befestigt ist, um einen abgeschlossenen Behälter zu bilden.

**6.** Vorrichtung nach Anspruch 5, **dadurch gekennzeichnet, dass** die obere Verkleidung (102) mindestens eine geneigte Ebene (103) aufweist, die auf eine Rolle (50) hin gerichtet ist.

**7.** Vorrichtung nach einem der vorstehenden Ansprüche, **dadurch gekennzeichnet, dass** der Träger (20) mindestens eine Zuführungsstange (104) aufweist, die das Schmiermittel zu einer zweiten Öffnung (22) führen kann.

**8.** Vorrichtung nach einem der vorstehenden Ansprüche, **dadurch gekennzeichnet, dass** jedes Gewichtselement (30) eine obere Fläche (FSUP) und eine untere Fläche (FINF) aufweist, die gegenüber einer Nabe (2) angeordnet sein können, wobei mindestens eine dieser Flächen (FINF, FSUP) an einer zusätzlichen Masse (37, 38) befestigt ist.

**9.** Vorrichtung nach Anspruch 8, **dadurch gekennzeichnet, dass** die zusätzliche Masse (37, 38) ein Loch (39) gegenüber jeder der ersten Öffnungen (31) des zugehörigen Gewichtselements (30) aufweist.

**10.** Vorrichtung nach einem der vorstehenden Ansprüche, **dadurch gekennzeichnet, dass** die ersten und zweiten Öffnungen (31, 22) jeweils einen Querschnitt aufweisen, der eine Krone (C1) auf einem vorbestimmten Kreisbogen (□) beschreibt.

**11.** Drehflügelflugzeug mit einem Hauptrotor (1) mit einer Nabe (2), wobei die Nabe (2) über eine Rotorwelle in eine Drehbewegung versetzt wird, wobei die Rotorwelle (3) durch eine erste Stufe eines Leistungsgetriebes (4) angetrieben wird, wobei das Drehflügelflugzeug eine Vorrichtung (10) zum Reduzieren von Vibrationen des Hauptrotors (1) nach einem der vorstehenden Ansprüche aufweist, mit einem Träger (20) sowie einer Mehrzahl von Gewichtselementen (30) und Rollen (50), wobei jedes Gewichtselement (30) zwei erste Öffnungen (31) aufweist, die jeweils mindestens teilweise gegenüber zwei zweiten Öffnungen (22) des Trägers (20) angeordnet sind, wobei jede Rolle (50) eine erste Öffnung (31) und eine zweite Öffnung (22), die sich zumindest teilweise gegenüberliegen, durchquert, um ein Gewichtselement (30) am Träger (20) zu befestigen, **dadurch gekennzeichnet, dass** die Vorrichtung (10) versehen ist mit:

- einem Antriebsmittel (80), welches sich mit einer ersten Drehgeschwindigkeit (V 1) dreht, die größer ist als eine zweite Drehgeschwindigkeit (V2) der Nabe (2), wobei die Antriebswelle (70) drehfest um eine Rotationsachse (AX1) des Trägers (20) angeordnet ist,
- einem Verbindungsmittel (60), welches den Träger (20) mit der Nabe (2) verbindet und eine Antriebswelle (70) aufweist, wobei das Verbindungsmittel (60) mit dem Träger (20) über ein Verbindungsorgan (90) verbunden ist, welches es dem Träger (20) erlaubt, eine Drehbewegung um die Rotationsachse (AX1) relativ zum Verbindungsmittel (60) durchzuführen,
- einem Schutzgehäuse (100), welches hermetisch an dem Verbindungsmittel (60) derart befestigt ist, dass es mit dem Verbindungsmittel (60) drehfest verbunden ist bei einer Rotation um die Rotationsachse (AX1), wobei das Gehäuse (100) den Träger (20) und die Gewichtselemente (30), die an diesem Träger (20) über die Rollen (50) befestigt sind, umschließt, wobei das Gehäuse (100) teilweise mit einem Schmiermittel (300) gefüllt ist.

**12.** Drehflügelflugzeug nach Anspruch 11, **dadurch gekennzeichnet, dass** die Antriebsmittel (80) ein sich drehendes Organ des Leistungsgetriebes (40) umfassen, wobei das sich drehende Organ eine Drehbewegung mit einer ersten Drehgeschwindigkeit (V1) durchführt.

**13.** Drehflügelflugzeug nach einem der Ansprüche 11 oder 12, **dadurch gekennzeichnet, dass** die Antriebsmittel (80) und die Rotorwelle (3) koaxial zueinander sind.

Fig.1

Fig.2

Fig.3

50    20

31

34

30

31

200

31

Fig.4

20    37

37    39

30

35

34    38

39

37

50

FSUP

30    31

35

31    36

32

Fig.5

34

FINF

33

38

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749901
- EP 1007406 A
- FR 2733483
- FR 2018491
- US 4212588 A
- FR 2768995